# EUROPEAN PATENT SPECIFICATION

(11) **EP 4 584 523 B1**
(45) Date of publication and mention of the grant of the patent: **17.06.2026**
(21) Application number: 23773331.6
(22) Date of filing: 06.09.2023
(51) Int. Cl.: F16L 37/14, F16B 21/14

(54) **QUICK CONNECTION DEVICE FOR CONNECTION BETWEEN COMPONENTS OF LIQUID OR GAS DISTRIBUTION SYSTEMS**
SCHNELLVERBINDUNGSVORRICHTUNG ZUR VERBINDUNG ZWISCHEN KOMPONENTEN VON FLÜSSIGKEITS- ODER GASVERTEILUNGSSYSTEMEN
DISPOSITIF DE RACCORDEMENT RAPIDE POUR RACCORDEMENT ENTRE DES COMPOSANTS DE SYSTÈMES DE DISTRIBUTION DE LIQUIDE OU DE GAZ

(30) Priority: 09.09.2022 IT 202200018366; 01.02.2023 IT 202300001533
(43) Date of publication of application: 16.07.2025
(73) Proprietor: Colombo, Renato, 25015 Desenzano del Garda (BS) (IT)
(72) Inventor: Colombo, Renato, 25015 Desenzano del Garda (BS) (IT)
(74) Representative: Modiano, Micaela Nadia
(86) International application number: PCT/IB2023/058804
(87) International publication number: WO 2024/052824

(56) References cited:
- EP-A2- 1 878 963
- EP-A2- 1 882 877

## Description

The present invention relates to a quick connection device for connection between components of liquid or gas distribution systems.

As is known, in order to make the connection between components, such as pipes, connectors, valves, etc., of liquid or gas distribution systems, special connecting elements are traditionally used.

For example, in order to make the connection between a valve element and a connecting element there can be, inside the body of the valve element, a cylindrical seat to which an end portion of the connecting element couples, provided as a cylindrical sleeve.

On the portion of this cylindrical sleeve that protrudes from the seat provided in the body of the valve element, an axial shoulder is defined which is directed away from the body of the valve element, and which is engaged by an elastic ring, which is activated using a ring nut which is associated, so that it can slide axially, with the body of the valve element.

Once the elastic ring has been used to activate the axial locking of the cylindrical sleeve end relative to the body of the valve element, the ring nut is locked with a safety band interposed between the ring nut and the body of the valve element, so as to make absolutely certain that the ring nut cannot disengage the elastic ring that effects the axial locking of the connecting element relative to the body of the valve element.

In order to overcome the problems existing in traditional solutions, such as for example structural complexity and the operational difficulties in assembly, EP1024324, in the name of the same owner, devises and discloses a device (subsequently given the trade name FASTEC) for making the connection between the body of the valve element and a connecting element, which comprises a cylindrical or conical seat, defined in the body of the valve element, and a substantially cylindrical or conical sleeve, which can be coupled to the seat and which is provided at the end of the connecting element to be connected to the valve element.

Sealing means are interposed between the above-mentioned seat and the sleeve.

The sleeve is provided, on the outer lateral surface of its portion that can be inserted in the seat, with at least one axial shoulder which is directed away from the end of the sleeve that can be inserted in the seat and which can be arranged, with the insertion of the sleeve in the seat, at at least one passage defined in the portion of the body of the valve element that is occupied by the seat and which interferes with the lateral surface of the seat.

This passage extends along a direction that is substantially straight and perpendicular to the axis of the seat, and it can be occupied by a locking pin which defines an abutment for the shoulder mentioned above in order to prevent the axial extraction of the sleeve from the seat.

The axial shoulder is, in particular, defined by a groove provided on the outer lateral surface of the portion of sleeve that is inserted in the seat.

In practice, the groove defines two mutually opposite axial shoulders and the pin is engaged between these.

The device further comprises means for retaining the pin in the passage.

In conventional solutions, these means comprise an elastically compressible ring which is arranged coaxially in the passage and which can be passed through with friction by the pin.

According to what is disclosed in EP1024324, the mouth of the passage has a threaded seat and the ring is placed on the bottom of this threaded seat. A threaded bushing engages this threaded seat and locks the ring in the passage. By partially screwing or unscrewing the bushing it is possible to vary the degree of expansion of the ring and therefore the degree of retention by friction applied by the ring on the pin.

Other known solutions involve substituting the threaded bushing with a ring that is rectangular in cross-section and has a notch and is elastically expandable in order to lock the elastically compressible ring in the seat.

The retention means further comprise means for stopping the sliding of the pin along the passage in a first position in which the pin is partially inserted in the passage but is disengaged from the sleeve, and in a second position in which the pin is inserted in the passage and is engaged with the sleeve.

Also Document EP 1 878 963 A2 discloses a quick connection device according to the preamble of claim 1.

The aim of the present invention is to provide a quick connection device for connection between components of liquid or gas distribution systems which is capable of improving the known art in one or more of the above-mentioned aspects.

Within this aim, an object of the invention is to provide a quick connection device for connection between components of liquid or gas distribution systems that is structurally simple, thus achieving greater simplicity both at the production stage and at the assembly stage.

Another object of the invention is to provide a quick connection device for connection between components of liquid or gas distribution systems that is highly reliable, easy to implement and of low cost.

This aim and these and other objects which will become more apparent hereinafter are achieved by a quick connection device for connection between components of liquid or gas distribution systems according to claim 1, optionally provided with one or more of the characteristics of the dependent claims.

Further characteristics and advantages of the invention will become more apparent from the description of some preferred, but not exclusive, embodiments of the quick connection device for connection between components of liquid or gas distribution systems according to the invention, which are illustrated for the purposes of non-limiting example in the accompanying drawings wherein:

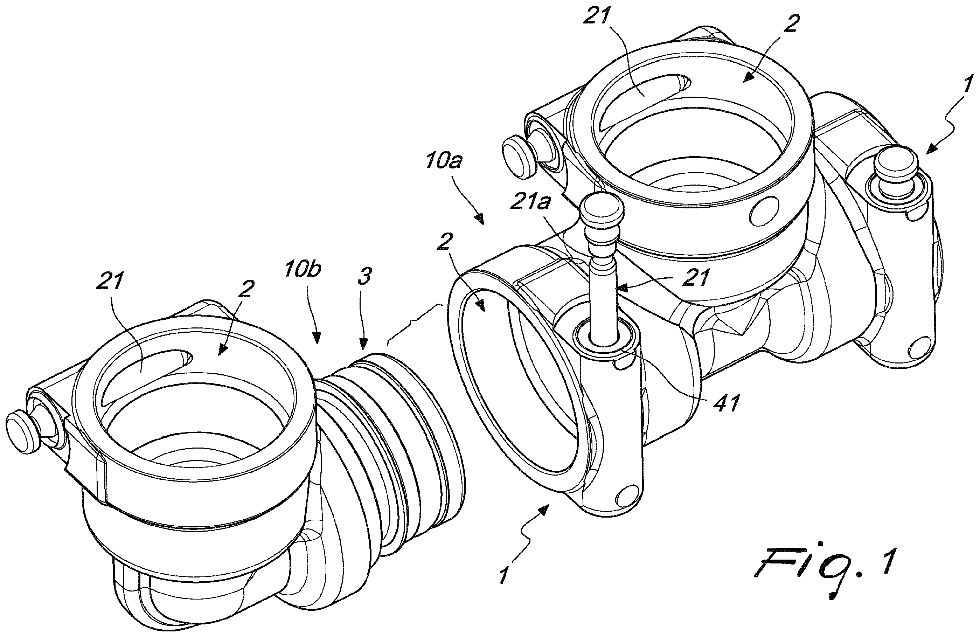

Figure 1 is a perspective view of two plumbing components being connected with a quick connection device according to the invention;

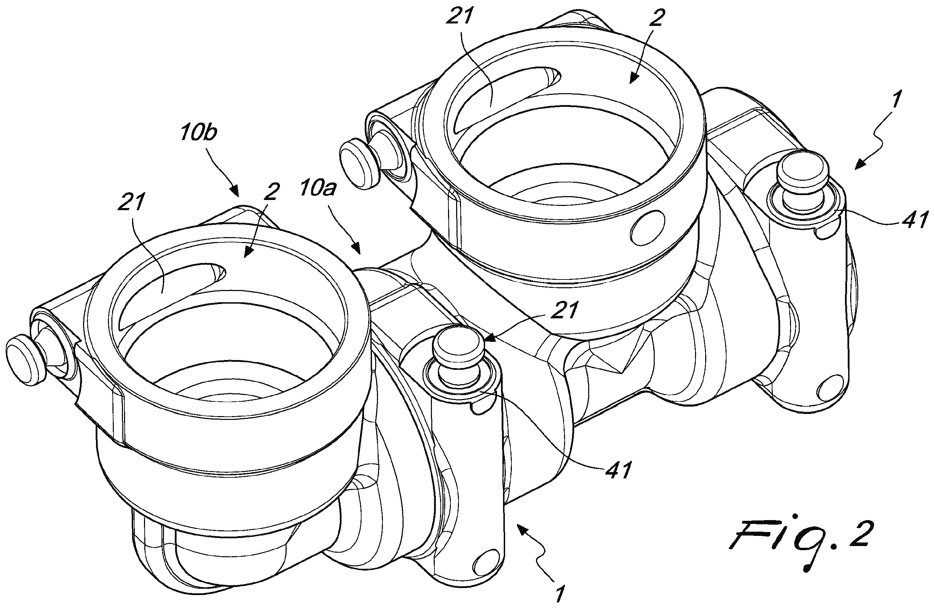

Figure 2 is another perspective view of the two plumbing components of Figure 1 connected to each other with the quick connection device according to the invention;

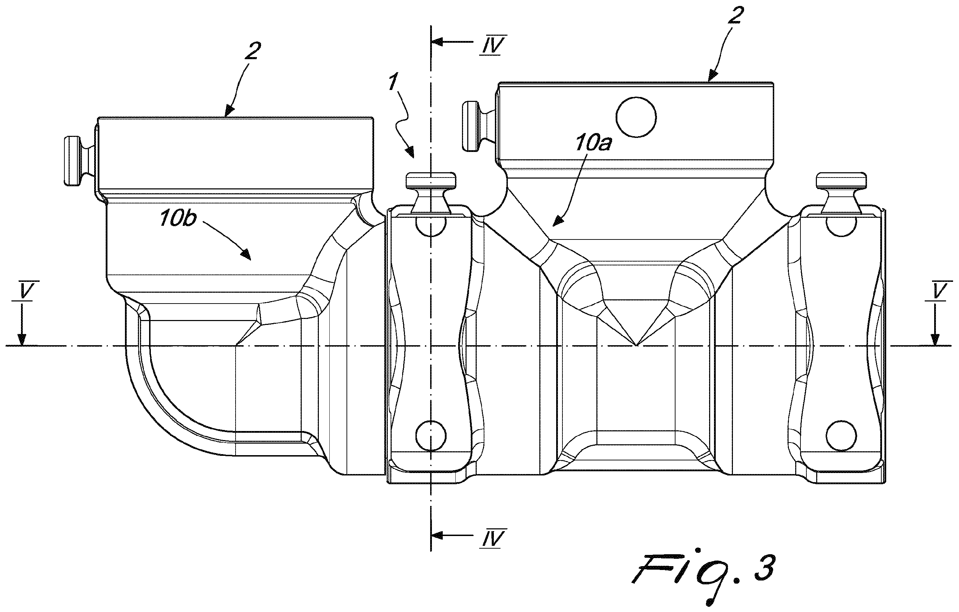

Figure 3 is a side view of the components shown in Figure 2;

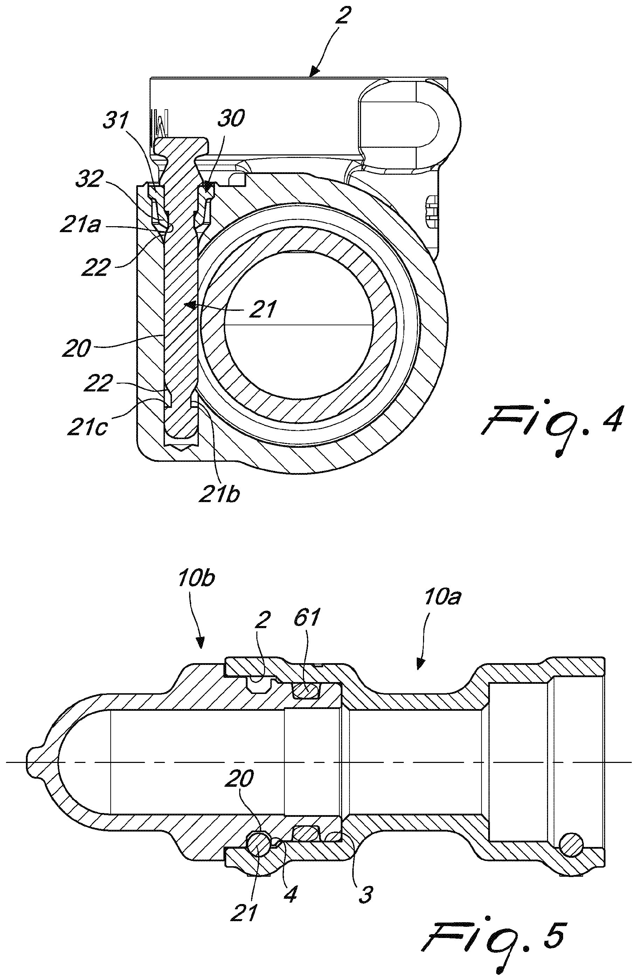

Figure 4 is a cross-sectional view of the quick connection device taken along the plane of arrangement identified by the line IV-IV of Figure 3;
Figure 5 is a cross-sectional view taken along the line V-V in Figure 4;
Figure 6 is a view from above of a quick connection device according to the invention;
Figure 7 is a cross-sectional view of the device taken along the plane of arrangement identified by the line VII-VII and with the locking pin fully inserted in the passage;
Figure 8 is a cross-sectional view similar to that of Figure 7 with the locking pin partially inserted in the passage;
Figure 9 is an enlarged-scale view of a portion of the cross-section of Figure 7 of a first embodiment of the seating of the retention device;
Figure 10 is a cross-sectional view similar to that of Figure 8 of a second embodiment of the seating of the retention device;
Figure 11 is a perspective view of a connecting element with a variation of embodiment of the retention device;
Figure 12 is a front elevation view of the connecting element of Figure 11;
Figure 13 is a cross-sectional view taken along plane of arrangement identified by the line XIII-XIII in Figure 12;
Figure 14 is an enlarged-scale view of a detail of the cross-section of Figure 13;
Figure 15 is an exploded perspective view of a connector;
Figure 16 is a front elevation view of the connector of Figure 15;
Figure 17 is a cross-sectional view of the connector taken along the plane of arrangement identified by the line XVII-XVII in Figure 16;
Figure 18 is a perspective view of a variation of embodiment of a connecting element;
Figure 19 is a front elevation view of the connecting element of Figure 18;
Figure 20 is a cross-sectional view taken along the plane of arrangement identified by the line XX-XX of Figure 19, with the locking pin fully inserted in the passage;
Figure 21 is a cross-sectional view similar to Figure 20 with the locking pin partially inserted in the respective passage.

With reference to the figures, the quick connection device for connection between components of liquid or gas distribution systems according to the invention, generally designated by the reference numeral 1, comprises a substantially cylindrical or conical seat 2 defined in a first component 10a, and a substantially cylindrical or conical sleeve 3, defined in a second component 10b.

The sleeve 3 can be mated with the seat 2 and has, on the outer lateral surface of the portion thereof that can be inserted in the seat 2, at least one axial shoulder 4, which is directed away from the end of the sleeve 3 that can be inserted in the seat 2.

The shoulder 4 is arranged at at least one passage 20 defined in the portion of the first component 10a that is occupied by the seat 2.

The passage 20 extends along a substantially straight direction that is substantially perpendicular to the axis of the seat 2 and is occupiable by a locking pin 21.

The locking pin 21 defines an abutment for the at least one axial shoulder 4 in order to prevent the axial extraction of the sleeve 3 from the seat 2.

The device 1 further comprises means for retaining the locking pin 21 in the passage 20.

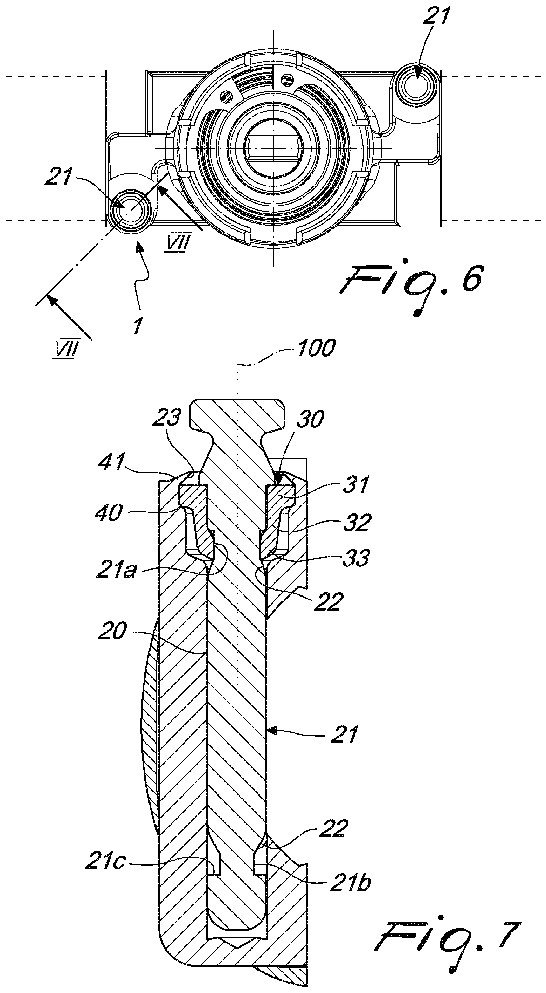

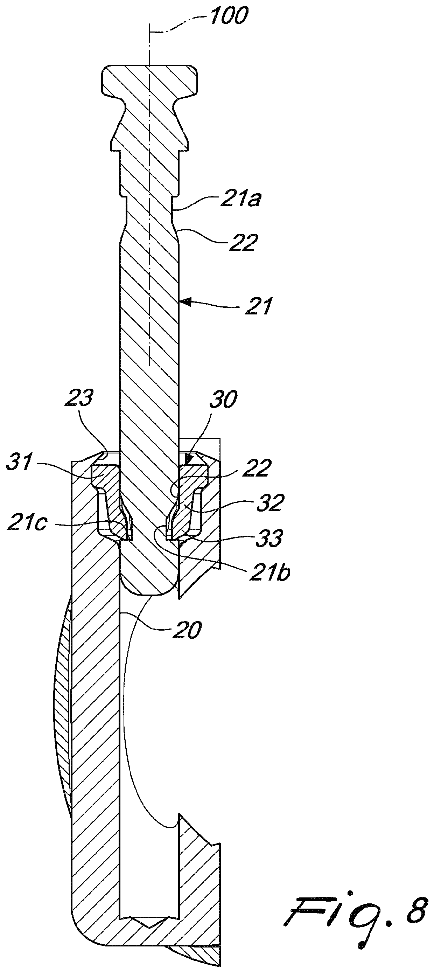

The retention means comprise means for stopping the sliding of the locking pin 21 along the passage 20 in a first position, in which the locking pin 21 is partially inserted in the passage 20 (as shown in Figure 8) but is disengaged from the sleeve 3, and in a second position (shown in Figure 7), in which the locking pin 21 is inserted in the passage 20 and engages with the sleeve 3.

The stopping means further comprise two circumferential grooves 21a, 21b which are defined on the lateral surface of the locking pin 21 and are mutually spaced apart along the extension of the locking pin 21.

According to the present invention, the retention means comprise a retention device 30 accommodated in a respective receptacle 23 arranged at the mouth of the passage 20.

The retention device 30 comprises a supporting body 31 and at least one elastically flexible wing 32 which is connected at one end to the supporting body 31 and has, at the other end, an engagement body 33 which can move between a position that is closer to the axis 100 of the locking pin 21, in which it is adapted to engage a respective circumferential groove 21a, 21b in order to lock the locking pin 21, and a position that is farther from the axis 100 of the locking pin 21, so as to allow the locking pin 21 to slide along the passage 20.

The transition of the engagement body 33 from the closer position to the farther position occurs as a result of the movement of the locking pin 21 along the respective axis 100.

In particular, the locking pin 21 defines a substantially cylindrical lateral surface, which is arranged between the circumferential grooves 21a, 21b.

Between the circumferential grooves 21a, 21b and the substantially cylindrical lateral surface respective conical connecting portions 22 are provided.

Specifically, the conical connecting portions 22 are adapted to facilitate the transition of the at least one engagement body 33 from the position closer to the axis 100 to the position farther from the axis 100.

The function of the circumferential groove 21a is to indicate to the user, in a "sensory" manner, that the locking pin 21 has been inserted and, as a consequence, the connection is established between the two components 10. The elasticity of the wings 32 when they are inserted in the seat 21a facilitates the speed of insertion of the locking pin 21 (by virtue of the lower friction between the sliding parts) and their consequent approach toward the axis 100 generates a "click" by virtue of which the user perceives that closure is achieved.

The circumferential groove 21b, in addition to ensuring the same effect when the locking pin 21 is brought to the partially-inserted condition that allows the decoupling or coupling between the components 10, ensures the mechanical arrest of the locking pin by virtue of the presence of the stop edge 21c which is configured to abut against the end of the wings 32. Since the retention device 30 is in turn retained in the receptacle 23, the locking pin 21 cannot be extracted.

According to a further embodiment, the locking of the retention device 30 in the respective receptacle 23 can be obtained by using a screw-and-nut coupling.

The screw-and-nut coupling comprises, for example, a threading provided on the lateral surface of the supporting body 31 which meshes with a complementary threading provided at the mouth of the receptacle 23.

Advantageously, the supporting body 31 is provided in a single piece with the at least one wing 32 and is, preferably, made of plastic material.

The supporting body 31 is kept locked within the respective receptacle 23.

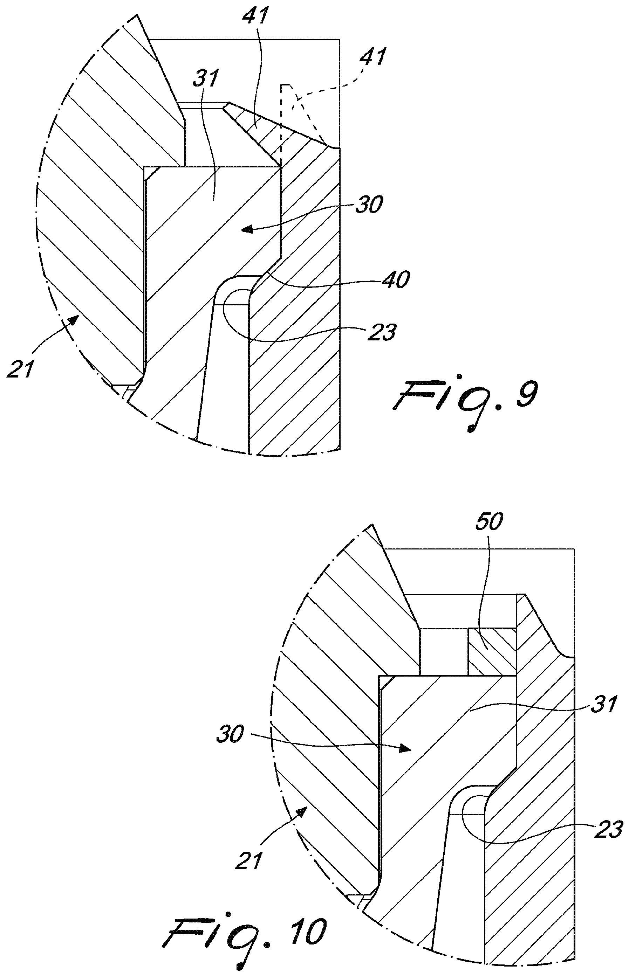

In particular, the supporting body 31 is axially locked by virtue of an abutment portion 40 and an inward-bending portion 41, shown in Figure 9, which is provided at the mouth of the receptacle 23, once the retention device 30 is coupled inside the receptacle 23.

As an alternative to the inward-bending portion 41, as shown in Figure 10, it is possible to have a locking bushing 50, for example engageable by way of threaded coupling at the mouth of the receptacle 23.

According to a preferred embodiment, the shoulder is defined by a circumferential recess defined on the outer lateral surface of the sleeve 3.

Specifically, the circumferential recess defines, on the outer lateral surface of the sleeve 3, two mutually opposite axial shoulders. In this case, the locking pin 21 engages between the two mutually opposite axial shoulders.

Preferably, the passage 20 is substantially tangential to the bottom of the circumferential recess defined on the outer lateral surface of the sleeve 3.

The device 1 is provided with sealing means, typically a gasket 61, interposed between the seat 2 and the sleeve 3.

The passage 20 interferes with the lateral surface of the seat 2.

The locking pin 21 comprises a head that protrudes at least partially from the first component 10a in which the seat 2 is defined, so as to allow the insertion and extraction of the locking pin 21 into and out of the passage 20.

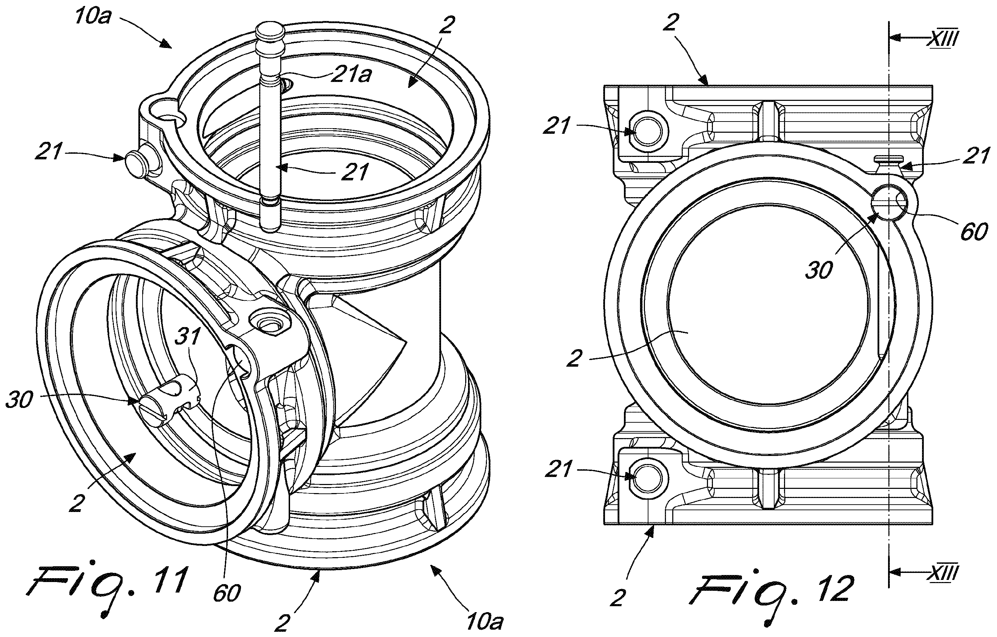

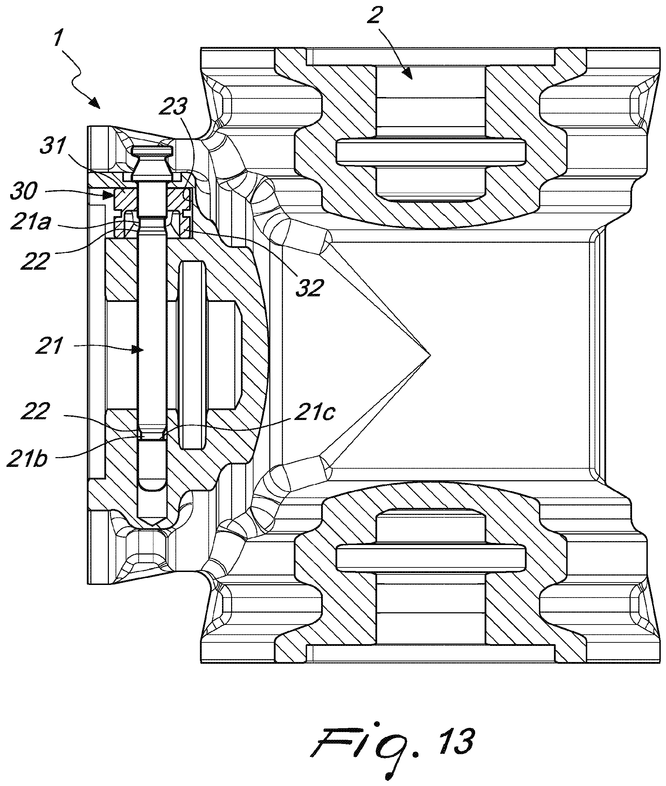

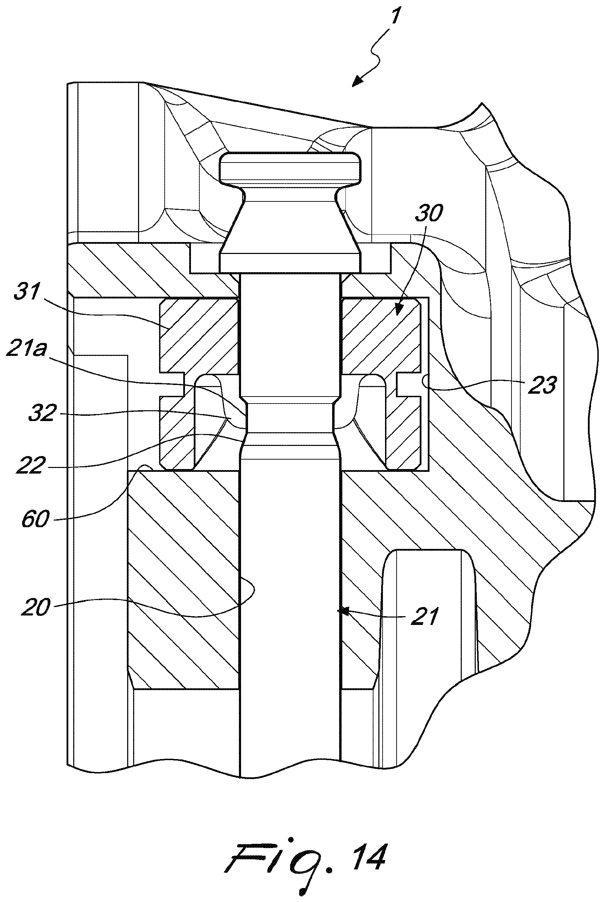

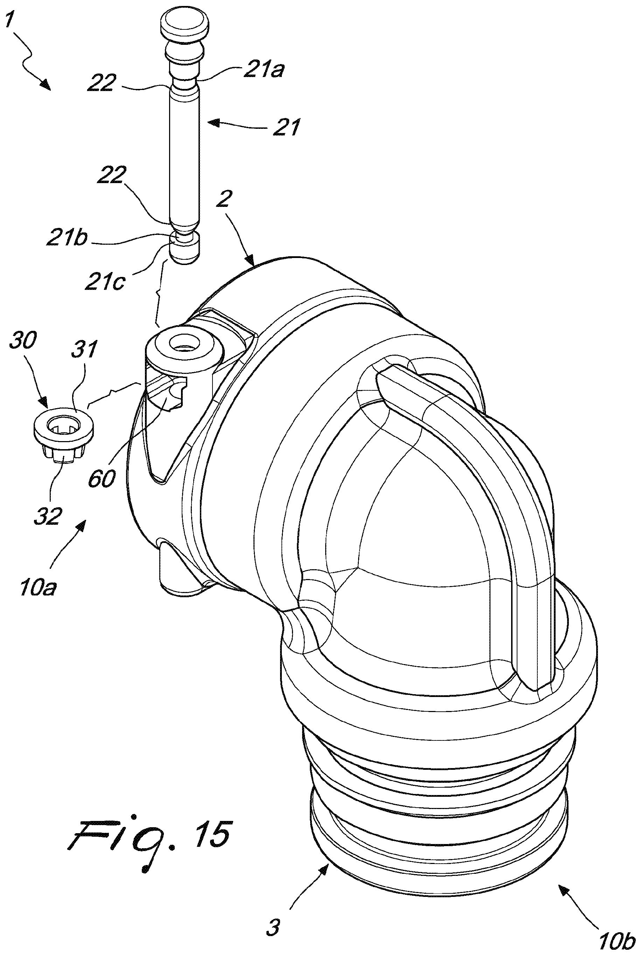

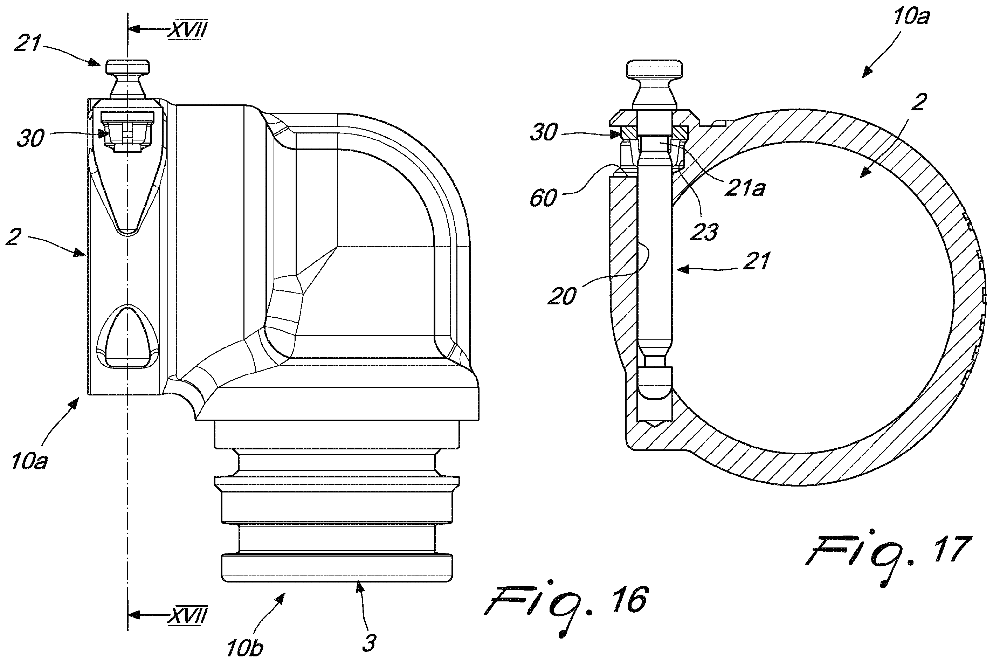

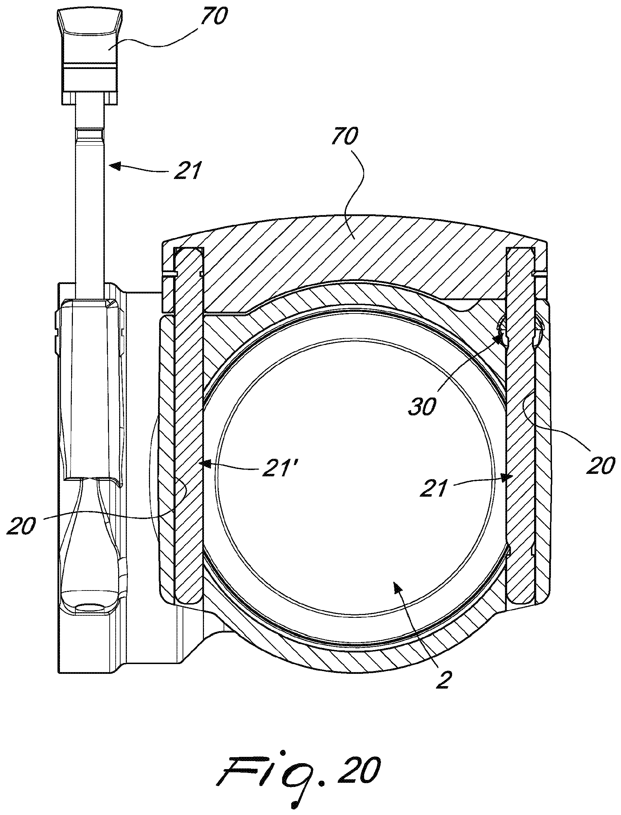

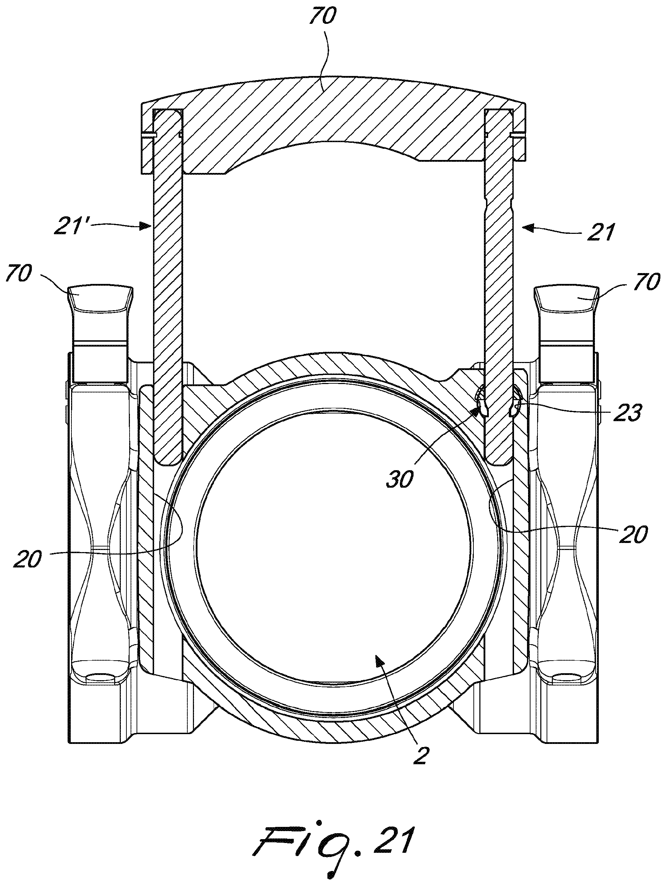

With reference to the embodiments shown in Figures 11 to 21, it is possible for the supporting body 31 to be inserted in the respective receptacle 23 arranged at the mouth of the passage 20 through an insertion opening 60 which is defined laterally and which extends substantially radially with respect to the direction of extension of the passage 20.

The receptacle 23, in this case, is contoured to block the movement of the supporting body 31 axially, i.e. in the direction of extension of the passage 20, and to allow it to move exclusively along the insertion opening 60.

The seating of the supporting body 31 inside the respective receptacle 23 is achieved when the respective locking pin 21 is completely disengaged from the passage 20. The subsequent insertion of the locking pin 21 in the passage 20, and of the supporting body 31 accommodated in it, locks the supporting body 31 in its position, stopping it from also moving in a radial direction, along the direction of extension of the insertion opening 60.

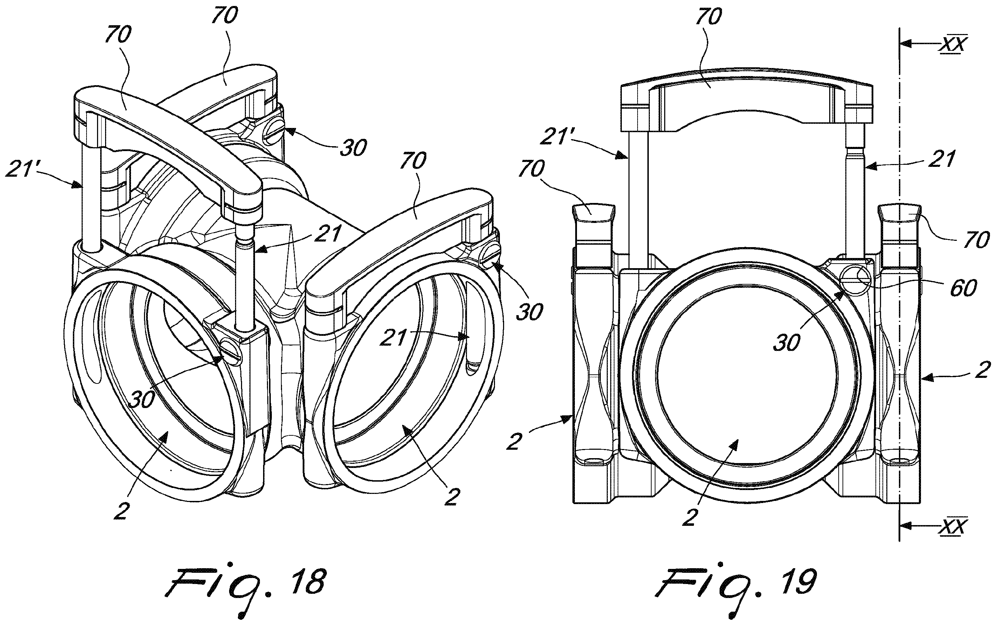

With reference to the embodiment shown in Figures 18 to 21, it is possible to have two passages 20 arranged mutually parallel on opposite sides of the sleeve 3.

At least one of the two passages 20 can be engaged by a respective locking pin 21, while the other passage 20 can be engaged by a pin 21', if the supporting body 30 is not arranged inside the passage 20, or by a second locking pin 21 if a supporting body 30 is positioned along the second passage 20.

The locking pin 21 and the pin 21' (or the two locking pins 21) are mutually connected by way of a connecting body 70 which connects the end portions of the pins 21, 21' protruding from the respective passage 20.

Assembly of the device 1 is as follows.

With the sleeve 3 inserted in the seat 2, the circumferential recess is positioned at the passage 20. At this point, the locking pin 21 is inserted in the passage 20, thus performing the axial locking of the first component 10a with respect to the second component 10b.

The particular embodiment of the retention means makes it possible to facilitate the mounting of the locking pin 21 inside the passage 20 and at the same time to ensure both an extremely reliable locking of the locking pin 21 in the insertion position and the disengagement position and, at the same time, a practical movement of the locking pin 21 along the passage 20.

The invention thus conceived is susceptible of numerous modifications and variations, all of which are within the scope of the appended claims;

The invention, thus conceived, is susceptible of numerous modifications and variations, all of which are within the scope of the appended claims. Moreover, all the details may be substituted by other, technically equivalent elements.

In practice the materials employed, provided they are compatible with the specific use, and the contingent dimensions and shapes, may be any according to requirements and to the state of the art.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. A quick connection device (1) for connection between components (10) of liquid or gas distribution systems, which comprises a substantially cylindrical or conical seat (2) defined in a first component (10a) and a substantially cylindrical or conical sleeve (3) defined on a second component (10b), which can be mated with said seat (2), said sleeve (3) having, on the outer lateral surface of the portion thereof that can be inserted in said seat (2), at least one axial shoulder (4), which is directed away from the end of said sleeve (3) that can be inserted in said seat (2), at at least one passage (20) defined in the portion of said first component (10a) that is occupied by said seat (2), said passage (20) extending along a substantially straight direction that is substantially perpendicular to the axis of said seat (2) and being occupiable by a locking pin (21) which defines an abutment for said at least one axial shoulder (4) in order to prevent the axial extraction of said sleeve (3) from said seat (2), means for retaining said locking pin (21) in said passage (20) being provided and comprising means for stopping the sliding of said locking pin (21) along said passage (20) in a first position, in which said locking pin (21) is partially inserted in said passage (20) but disengaged from said sleeve (3), and in a second position, in which said locking pin (21) is inserted into said passage (20) and engages said sleeve (3), said stopping means comprising two circumferential grooves (21a, 21b) which are defined on the lateral surface of said locking pin (21) and are mutually spaced apart along the extension of said locking pin (21), wherein said retention means comprise a retention device (30) accommodated in a respective receptacle (23) arranged at the mouth of said passage (20), **characterized in that** said retention device (30) comprising a supporting body (31) and at least one elastically flexible wing (32) which is connected at one end to said supporting body (31) and has, at the other end, an engagement body (33) which can move between a position that is closer to the axis (100) of said locking pin (21), in which it is adapted to engage in a respective circumferential groove (21a, 21b) in order to lock said locking pin (21), and a position that is farther from the axis (100) of said locking pin (21), the transition of said at least one engagement body (33) from said closer position to said spaced-apart position being executable as a result of the movement of said locking pin (21) along the respective axis (100).

2. The device (1) according to claim 1, **characterized in that** said locking pin (21) defines a substantially cylindrical lateral surface arranged between said circumferential grooves (21a, 21b), respective conical connecting portions (22) being provided which are arranged between said circumferential grooves (21a, 21b) and said substantially cylindrical lateral surface, said conical connecting portions (22) being adapted to facilitate the transition of said at least one engagement body (33) from said position closer to the axis (100) to said position farther from the axis (100).

3. The device (1) according to claim 1, **characterized in that** said supporting body (31) is provided in a single piece with said at least one elastically flexible wing (32).

4. The device (1) according to claim 1, **characterized in that** said supporting body (31) is kept locked within the respective receptacle (23).

5. The device (1) according to one or more of the preceding claims, **characterized in that** said supporting body (31) is axially locked in said receptacle (23) between an abutment portion (40) and an inward-bending portion (41) provided at the mouth of said receptacle (23) once the retention device (30) is coupled inside the receptacle (23).

6. The device (1) according to claim 1, **characterized in that** it comprises a locking bushing (50) which is engageable at the mouth of said receptacle (23) for the axial locking of said supporting body (31) in said receptacle (23).

7. The device (1) according to claim 1, **characterized in that** said at least one axial shoulder (4) is defined by a circumferential recess defined on the outer lateral surface of said sleeve (3).

8. The device (1) according to claim 7, **characterized in that** said circumferential recess defines, on the outer lateral surface of said sleeve (3), two mutually opposite axial shoulders, said locking pin (21) engaging between said two mutually opposite axial shoulders.

9. The device (1) according to claim 7, **characterized in that** said passage (20) is substantially tangential to a bottom of said circumferential recess defined on the outer lateral surface of said sleeve (3).

10. The device (1) according to claim 1, **characterized in that** it comprises sealing means (61) interposed between said seat (2) and said sleeve (3).

11. The device (1) according to claim 1, **characterized in that** said passage (20) interferes with the lateral surface of said seat (2).

12. The device (1) according to claim 1, **characterized in that** said locking pin (21) comprises a head that protrudes at least partially from the first component (10a) in which said seat (2) is defined, so as to allow the insertion and extraction of the locking pin (21) into and out of the passage (20).

13. The device (1) according to one or more of the preceding claims, **characterized in that** said passage (20) is in connection with at least one insertion opening (60) which is defined laterally and which extends substantially radially with respect to the direction of extension of the respective passage (20), said supporting body (31) being insertable in the respective receptacle (23) that is arranged at the mouth of the respective passage (20).

14. The device (1) according to claim 13, **characterized in that** said receptacle (23) is contoured to axially lock, in the direction of extension of the respective passage (20), the movement of said supporting body (31).

15. The device (1) according to one or more of the preceding claims, **characterized in that** it comprises two passages (20) arranged mutually parallel on opposite sides of the respective sleeve (3), at least one of said two passages (20) being engageable by a respective locking pin (21), the other passage (20) being engageable by a pin (21') or by a second locking pin (21) if a supporting body (30) is positioned along said second passage (20).

16. The device (1) according to claim 15, **characterized in that** said locking pin (21) and said pin (21') are mutually connected by way of a connecting body (70) which connects the end portions of said pins (21, 21') protruding from the respective passage (20).

## Patentansprüche

1. Eine Schnellverbindungsvorrichtung (1) zur Verbindung zwischen Komponenten (10) von Flüssigkeits- oder Gasverteilungssystemen, die Folgendes umfasst: einen im Wesentlichen zylindrischen oder kegelförmigen Sitz (2), der in einer ersten Komponente (10a) bestimmt ist, und eine im Wesentlichen zylindrische oder kegelförmige Hülse (3), die auf einer zweiten Komponente (10b) bestimmt, welche mit dem Sitz (2) verbunden werden kann; wobei die Hülse (3) an der äußeren Seitenfläche des Abschnitts davon, der in den Sitz (2) eingeführt werden kann, mindestens eine axiale Schulter (4) hat, welche von dem Ende der Hülse (3) abgewandt ist, das in den Sitz (2) eingeführt werden kann, mindestens einen Durchgang (20), der in dem Abschnitt der ersten Komponente (10a) bestimmt ist, welcher von dem Sitz (2) eingenommen ist, wobei der Durchgang (20) sich in einer im Wesentlichen geraden Richtung erstreckt, die im Wesentlichen senkrecht zur Achse des Sitzes (2) ist und von einem Sicherungsstift (21) eingenommen werden kann, welcher ein Widerlager für die mindestens eine axiale Schulter (4) bestimmt, um die axiale Extraktion der Hülse (3) aus dem Sitz (2) zu verhindern; wobei Mittel zum Halten des Sicherungsstifts (21) in dem Durchgang (20) bereitgestellt sind und Mittel umfassen, um das Gleiten des Sicherungsstifts (21) entlang dem Durchgang (20) in eine erste Position, in welcher der Sicherungsstift (21) teilweise in den Durchgang (20) eingeführt, aber von der Hülse (3) gelöst ist, und in eine zweite Position, in welcher der Sicherungsstift (21) in den Durchgang (20) eingeführt ist und in die Hülse (3) eingreift, anzuhalten; wobei die Anhaltemittel zwei Umfangsnuten (21a, 21b) umfassen, die in der Seitenfläche des Sicherungsstifts (21) bestimmt und voneinander entlang der Erstreckung des Sicherungsstifts (21) beabstandet sind, wobei die Haltemittel eine Haltevorrichtung (30) umfassen, welche in einer entsprechenden Aufnahmevorrichtung (23) aufgenommen ist, die an der Öffnung des Durchgangs (20) angeordnet ist; **dadurch gekennzeichnet, dass** die Haltevorrichtung (30) einen Haltekörper (31) und mindestens einen elastisch biegsamen Flügel (32) umfasst, der an einem Ende mit dem Haltekörper (31) verbunden ist und am anderen Ende einen Eingreifkörper (33) hat, welcher sich zwischen einer Position, die näher an der Achse (100) des Sicherungsstifts (21) ist und in der er ausgebildet ist, um in eine entsprechende Umfangsnut (21a, 21b) einzugreifen, um den Sicherungsstift (21) zu blockieren, und einer Position bewegen kann, die weiter von der Achse (100) des Sicherungsstifts (21) entfernt ist; wobei der Übergang des mindestens einen Eingreifkörpers (33) aus der näheren Position in die beabstandete Position infolge der Bewegung des Sicherungsstifts (21) entlang der entsprechenden Achse (100) ausführbar ist.

2. Die Vorrichtung (1) gemäß Anspruch 1, **dadurch gekennzeichnet, dass** der Sicherungsstift (21) eine im Wesentlichen zylindrische Seitenfläche bestimmt, die zwischen den Umfangsnuten (21a, 21b) angeordnet ist, wobei entsprechende kegelförmige Verbindungsabschnitte (22) bereitgestellt sind, die zwischen den Umfangsnuten (21a, 21b) und der im Wesentlichen zylindrischen Seitenfläche angeordnet sind, wobei die kegelförmigen Verbindungsabschnitte (22) ausgebildet sind, um den Übergang des mindestens einen Eingreifkörpers (33) aus der Position näher an der Achse (100) in die Position weiter von der Achse (100) entfernt zu erleichtern.

3. Die Vorrichtung (1) gemäß Anspruch 1, **dadurch gekennzeichnet, dass** der Haltekörper (31) einteilig mit dem mindestens einen elastisch biegsamen Flügel (32) ausgebildet ist.

4. Die Vorrichtung (1) gemäß Anspruch 1, **dadurch gekennzeichnet, dass** der Haltekörper (31) in der entsprechenden Aufnahmevorrichtung (23) blockiert gehalten wird.

5. Die Vorrichtung (1) gemäß einem oder mehreren der obigen Ansprüche, **dadurch gekennzeichnet, dass** der Haltekörper (31) in der Aufnahmevorrichtung (23) axial zwischen einem Widerlagerabschnitt (40) und einem sich einwärtsbiegenden Abschnitt (41) blockiert wird, der an der Öffnung der Aufnahmevorrichtung (23) angebracht ist, sobald die Haltevorrichtung (30) in der Aufnahmevorrichtung (23) gekoppelt ist.

6. Die Vorrichtung (1) gemäß Anspruch 1, **dadurch gekennzeichnet, dass** sie eine Feststellbuchse (50) umfasst, die in der Lage ist, an der Öffnung der Aufnahmevorrichtung (23) zum axialen Blockieren des Haltekörpers (31) in der Aufnahmevorrichtung (23) einzugreifen.

7. Die Vorrichtung (1) gemäß Anspruch 1, **dadurch gekennzeichnet, dass** die mindestens eine axiale Schulter (4) durch eine Umfangsvertiefung bestimmt ist, die an der äußeren Seitenfläche der Hülse (3) bestimmt ist.

8. Die Vorrichtung (1) gemäß Anspruch 7, **dadurch gekennzeichnet, dass** die Umfangsvertiefung an der äußeren Seitenfläche der Hülse (3) zwei einander gegenüberliegende axiale Schultern bestimmt, wobei der Sicherungsstift (21) zwischen die zwei einander gegenüberliegenden axialen Schultern eingreift.

9. Die Vorrichtung (1) gemäß Anspruch 7, **dadurch gekennzeichnet, dass** der Durchgang (20) im Wesentlichen tangential zu einem Boden der Umfangsvertiefung ist, die an der äußeren Seitenfläche der Hülse (3) bestimmt ist.

10. Die Vorrichtung (1) gemäß Anspruch 1, **dadurch gekennzeichnet, dass** sie Dichtungsmittel (61) umfasst, die zwischen dem Sitz (2) und der Hülse (3) angeordnet sind.

11. Die Vorrichtung (1) gemäß Anspruch 1, **dadurch gekennzeichnet, dass** der Durchgang (20) die Seitenfläche des Sitzes (2) blockiert.

12. Die Vorrichtung (1) gemäß Anspruch 1, **dadurch gekennzeichnet, dass** der Sicherungsstift (21) einen Kopf umfasst, der zumindest teilweise von der ersten Komponente (10a) vorsteht, in welcher der Sitz (2) bestimmt ist, um das Einsetzen und Herausziehen des Sicherungsstifts (21) in den und aus dem Durchgang (20) zu gestatten.

13. Die Vorrichtung (1) gemäß einem oder mehreren der obigen Ansprüche, **dadurch gekennzeichnet, dass** der Durchgang (20) in Verbindung mit mindestens einer Einführöffnung (60) steht, die seitlich bestimmt ist und sich im Wesentlichen radial mit Bezug auf die Erstreckungsrichtung des entsprechenden Durchgangs (20) erstreckt, wobei der Haltekörper (31) in die jeweilige Aufnahmevorrichtung (23) einführbar ist, die an der Öffnung des entsprechenden Durchgangs (20) angeordnet ist.

14. Die Vorrichtung (1) gemäß Anspruch 13, **dadurch gekennzeichnet, dass** die Aufnahmevorrichtung (23) konturiert ist, um die Bewegung des Haltekörpers (31) axial in Erstreckungsrichtung des entsprechenden Durchgangs (20) zu blockieren.

15. Die Vorrichtung (1) gemäß einem oder mehreren der obigen Ansprüche, **dadurch gekennzeichnet, dass** sie zwei Durchgänge (20) umfasst, die parallel zueinander auf gegenüberliegenden Seiten der entsprechenden Hülse (3) angeordnet sind, wobei in mindestens einen der beiden Durchgänge (20) ein entsprechender Sicherungsstift (21) eingreifen kann, wobei in den anderen Durchgang (20) ein Stift (21') oder ein zweiter Sicherungsstift (21) eingreifen kann, wenn ein Haltekörper (30) entlang dem zweiten Durchgang (20) positioniert ist.

16. Die Vorrichtung (1) gemäß Anspruch 15, **dadurch gekennzeichnet, dass** der Sicherungsstift (21) und der Stift (21') miteinander über einen Verbindungskörper (70) verbunden sind, der die Endabschnitte der Stifte (21, 21') verbindet, welche vom entsprechenden Durchgang (20) vorstehen.

## Revendications

1. Dispositif de raccordement rapide (1) pour raccordement entre des composants (10) de systèmes de distribution de liquides ou de gaz, qui comprend un siège (2) sensiblement cylindrique ou conique formé dans un premier composant (10a) et un manchon (3) sensiblement cylindrique ou conique formé sur un deuxième composant (10b), qui peut être accouplée avec ledit siège (2), ledit manchon (3) comportant, sur la surface latérale extérieure de la partie de celui-ci pouvant être insérée dans ledit siège (2), au moins un épaulement axial (4), qui s'étend à l'opposé de l'extrémité dudit manchon (3) pouvant être insérée dans ledit siège (2), au moins un passage (20) défini dans la partie dudit premier composant (10a) occupée par ledit siège (2), ledit passage (20) s'étendant selon une direction sensiblement rectiligne qui est sensiblement perpendiculaire à l'axe dudit siège (2) et pouvant être occupé par une goupille de verrouillage (21) qui définit une butée pour ledit au moins un épaulement axial (4) afin d'empêcher l'extraction axiale dudit manchon (3) dudit siège (2), des moyens pour retenir ladite goupille de verrouillage (21) dans ledit passage (20) étant prévus et comprenant des moyens pour bloquer le glissement de ladite goupille de verrouillage (21) le long dudit passage (20) dans une première position, dans laquelle ladite goupille de verrouillage (21) est partiellement insérée dans ledit passage (20) mais désengagée dudit manchon (3), et dans une deuxième position, dans laquelle ladite goupille de verrouillage (21) est insérée dans ledit passage (20) et s'engage avec ledit manchon (3), lesdits moyens de blocage comprenant deux rainures circonférentielles (21a, 21b) qui sont définies sur la surface latérale de ladite goupille de verrouillage (21) et sont mutuellement espacées le long de l'extension de ladite goupille de verrouillage (21), où lesdits moyens de retenue comprennent un dispositif de retenue (30) logé dans un réceptacle respectif (23) agencé à l'embouchure dudit passage (20), **caractérisé en ce que** ledit dispositif de retenue (30) comprend un corps de support (31) et au moins une aile élastiquement flexible (32) qui est reliée à une extrémité audit corps de support (31) et qui comporte, à l'autre extrémité, un corps d'engagement (33) pouvant se déplacer entre une position plus proche de l'axe (100) de ladite goupille de verrouillage (21), dans laquelle il est adapté pour s'engager dans une rainure circonférentielle respective (21a, 21b) afin de verrouiller ladite goupille de verrouillage (21), et une position plus éloignée de l'axe (100) de ladite goupille de verrouillage (21), la transition dudit au moins un corps d'engagement (33) de ladite position rapprochée à ladite position espacée pouvant être effectuée à la suite du mouvement de ladite goupille de verrouillage (21) le long de l'axe respectif (100).

2. Dispositif (1) selon la revendication 1, **caractérisé en ce que** ladite goupille de verrouillage (21) définit une surface latérale sensiblement cylindrique disposée entre lesdites rainures circonférentielles (21a, 21b), des parties de raccordement coniques respectives (22) étant prévues, lesquelles sont disposées entre lesdites rainures circonférentielles (21a, 21b) et ladite surface latérale sensiblement cylindrique, lesdites parties de raccordement coniques (22) étant adaptées pour faciliter la transition dudit au moins un corps d'engagement (33) de ladite position plus proche de l'axe (100) vers ladite position plus éloignée de l'axe (100).

3. Dispositif (1) selon la revendication 1, **caractérisé en ce que** ledit corps de support (31) est réalisé d'un seul tenant avec ladite au moins une aile élastiquement flexible (32).

4. Dispositif (1) selon la revendication 1, **caractérisé en ce que** ledit corps de support (31) est maintenu verrouillé à l'intérieur du réceptacle respectif (23).

5. Dispositif (1) selon une ou plusieurs des revendications précédentes, **caractérisé en ce que** ledit corps de support (31) est verrouillé axialement dans ledit réceptacle (23) entre une partie de butée (40) et une partie recourbée vers l'intérieur (41) prévue à l'embouchure dudit réceptacle (23) une fois que le dispositif de retenue (30) est couplé à l'intérieur du réceptacle (23).

6. Dispositif (1) selon la revendication 1, **caractérisé en ce qu'**il comprend une douille de verrouillage (50) pouvant s'engager à l'embouchure dudit réceptacle (23) pour le verrouillage axial dudit corps de support (31) dans ledit réceptacle (23).

7. Dispositif (1) selon la revendication 1, **caractérisé en ce que** ledit au moins un épaulement axial (4) est défini par un évidement circonférentiel défini sur la surface latérale extérieure dudit manchon (3).

8. Dispositif (1) selon la revendication 7, **caractérisé en ce que** ledit évidement circonférentiel définit, sur la surface latérale extérieure dudit manchon (3), deux épaulements axiaux mutuellement opposés, ladite goupille de verrouillage (21) s'engageant entre lesdits deux épaulements axiaux mutuellement opposés.

9. Dispositif (1) selon la revendication 7, **caractérisé en ce que** ledit passage (20) est sensiblement tangent à un fond dudit évidement circonférentiel défini sur la surface latérale extérieure dudit manchon (3).

10. Dispositif (1) selon la revendication 1, **caractérisé en ce qu'**il comprend des moyens d'étanchéité (61) interposés entre ledit siège (2) et ledit manchon (3).

11. Dispositif (1) selon la revendication 1, **caractérisé en ce que** ledit passage (20) interfère avec la surface latérale dudit siège (2).

12. Dispositif (1) selon la revendication 1, **caractérisé en ce que** ladite goupille de verrouillage (21) comprend une tête qui fait saillie au moins partiellement du premier composant (10a) dans lequel ledit siège (2) est défini, de manière à permettre l'insertion et l'extraction de la goupille de verrouillage (21) dans et hors du passage (20).

13. Le dispositif (1) selon une ou plusieurs des revendications précédentes, **caractérisé en ce que** ledit passage (20) est en communication avec au moins une ouverture d'insertion (60) qui est définie latéralement et qui s'étend sensiblement radialement par rapport à la direction d'extension du passage respectif (20), ledit corps de support (31) pouvant être inséré dans le réceptacle respectif (23) qui est disposé à l'embouchure du passage respectif (20).

14. Dispositif (1) selon la revendication 13, **caractérisé en ce que** ledit réceptacle (23) est profilé de manière à bloquer axialement, dans la direction d'extension du passage respectif (20), le mouvement dudit corps de support (31).

15. Dispositif (1) selon l'une ou plusieurs des revendications précédentes, **caractérisé en ce qu'**il comprend deux passages (20) disposés parallèlement l'un à l'autre sur les côtés opposés du manchon (3) correspondant, au moins l'un desdits deux passages (20) pouvant être engagé par une goupille de verrouillage respective (21), l'autre passage (20) pouvant être engagé par une goupille (21') ou par une deuxième goupille de verrouillage (21) si un corps de support (30) est positionné le long dudit deuxième passage (20).

16. Dispositif (1) selon la revendication 15, **caractérisé en ce que** ladite goupille de verrouillage (21) et ladite goupille (21') sont reliées entre elles par l'intermédiaire d'un corps de liaison (70) qui relie les parties d'extrémité desdites goupilles (21, 21') faisant saillie du passage respectif (20).
